# EUROPEAN PATENT APPLICATION

(11) **EP 2 845 563 A1**
(43) Date of publication of application: **11.03.2015**
(21) Application number: 14182075.3
(22) Date of filing: 25.08.2014
(51) Int. Cl.: A61C 8/00

(54) **Dental implant cleaner**

(30) Priority: 06.09.2013 KR 20130107495
(71) Applicant: Siwon Co., Ltd., Wonju-si, Gangwon-do 220-702 (KR)
(72) Inventor: Kim, Gun-Tae, 220-781 Wonju-si, Gangwon-do (KR)
(74) Representative: Arth, Hans-Lothar

(57) **Abstract**

The present invention discloses a dental implant cleaner 40a comprising a main body 41a, a shank 41b provided at the upper surface of the main body 41a to be mounted on a hand-piece, a plurality of elastic supporting legs 43a provided at the lower surface of the main body 41a to encompass the surface of the dental implant, and a plurality of cleaning tips 44a provided inwardly at the end portion of the elastic supporting legs 43a respectively to be contacted on the surface of the dental implant.

## Description

### Technical Field

The present invention relates to a dental implant cleaner, and more particularly, to the dental implant cleaner enabling to quickly and easily clean foreign substances such as dental plaque, inflammatory tissue or bacteria which are built up the surface of the dental implant after a dental implant surgery.

### Background Art

A dental implant is for making an artificial tooth instead of a functional missing tooth, and a fixture is fixedly implanted to an alveolar bone, an abutment is fixedly connected to the fixture, and an artificial tooth(prosthetic appliance) is fixedly connected to the abutment.

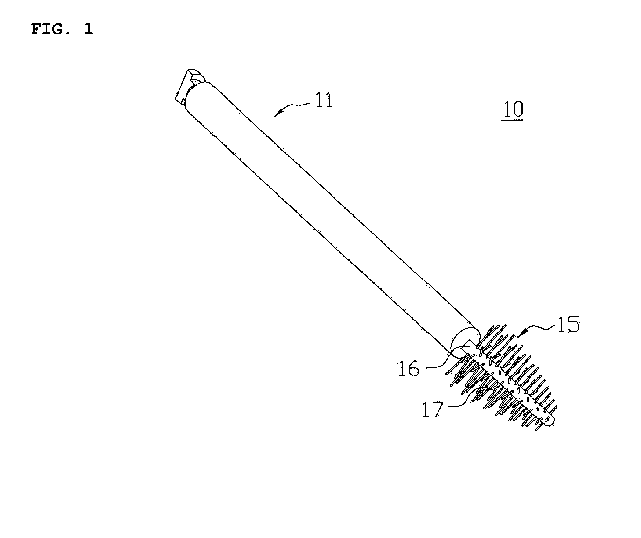

The present applicant has a Korean Registered Patent No. 10-1157406 (Brush for removing foreign substances built up the surface of a dental implant) for cleaning a dental implant, and its representative figure is shown in FIG. 1.

As shown in FIG. 1, the prior removing brush 10 has one end portion provided with a chuck portion 11 which is fixedly mounted to a chuck of a hand-piece and the other end portion provided with a brush portion 15 which is rotated by the driving force of the hand-piece and removes foreign substances such as dental plaque, inflammatory tissue or bacteria which are built up the surface of the implant.

The brush portion 15 is composed of a brush body 16 which is coaxially extended from the end of the other end portion and a plurality of brushes 17 formed to the surface of the brush body 16.

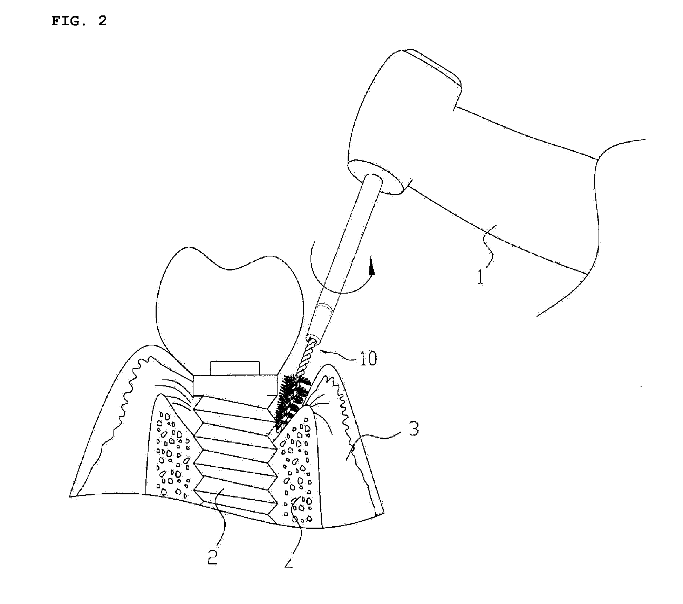

As shown in FIG. 2, the chuck portion of the prior removing brush 10 is mounted to the hand-piece 1, and the brush 10 is enough deeply inserted between the dental implant 2 and the gum 3. At this time, the gum 3 is swollen by the foreign substances such as dental plaque, inflammatory tissue or bacteria, and the alveolar bone 4 is partially damaged and absorbed.

The brush 10, which is enough deeply inserted, is rotated in a high or low speed in the arrow direction and removes the foreign substances built up the dental implant 2, the gum 3 or the alveolar bone 4.

The conventional removing brush having the above mentioned structure has caused inconvenience and long time in work to remove the foreign substances because a worker should very carefully move the brush following to the surface of the dental implant to remove the foreign substances.

### Disclosure of Invention

### Technical Goals

The present invention is created to solve the above mentioned conventional problem, and the goal of the present invention is to provide a dental implant cleaner enabling to quickly and easily clean the infected surface of a dental implant by providing a plurality of elastic supporting legs to encompass the infected surface of a dental implant with a determined gap and by providing a plurality of cleaning tips at the elastic supporting legs to contact the infected surface of a dental implant.

### Technical solutions

To accomplish the aim of the present invention, the present invention provides a dental implant cleaner comprising a main body, a shank provided at the upper surface of the main body to be mounted on a hand-piece, a plurality of elastic supporting legs provided at the lower surface of the main body to encompass the surface of the dental implant, and a plurality of cleaning tips provided inwardly at the end portion of the elastic supporting legs respectively to be contacted on the surface of the dental implant.

In the first aspect, the present invention is characterized in that the elastic supporting legs are straightly stretched downwardly, further characterized in that the cleaning tips are bent from the end portion of the elastic supporting legs respectively, still further characterized in that the bent angle is 45°∼ 145°, and still further characterized in that the bent angle is an obtuse angle.

In the second aspect, the present invention is characterized in that the elastic supporting legs are inclined to be narrower inwardly in downward, further characterized in that the cleaning tips are bent from the end portion of the elastic supporting legs respectively, still further characterized in that the bent angle is 45°∼ 145°, and still further characterized in that the bent angle is an obtuse angle.

In the third aspect, the present invention is characterized in that the elastic supporting legs are inclined to be narrower inwardly in downward and have a pot shaped upper portion, further characterized in that the cleaning tips are bent from the end portion of the elastic supporting legs respectively, still further characterized in that the bent angle is 45°∼ 145°, and still further characterized in that the bent angle is an obtuse angle.

### Effect of the Invention

According to the present invention, a plurality of elastic supporting legs are provided to encompass the infected surface of a dental implant with a determined gap, a plurality of cleaning tips are provided at the elastic supporting legs to contact the infected surface of the dental implant, and the cleaning tips are rotated in one way or two way, or vibrated by the driving force of the hand-piece following to the surface of the dental implant, and therefore the infected surface of a dental implant can be quickly and easily cleaned and the cleaning work can be successfully done even by unskilled worker.

### Brief Description of Drawings

FIG. 1 is a perspective view illustrating the conventional removing brush;
FIG. 2 is an exemplary view illustrating a state to clean the infected surface of the dental implant using the brush in FIG. 1;
FIG. 3 is a concept view illustrating the dental implant cleaner according to the first aspect of the present invention;
FIGs. 4A and 4B are views illustrating the dental implant cleaners according to various embodiments according to the first aspect in FIG. 3;
FIG. 5 is a concept view illustrating the dental implant cleaner according to the second aspect of the present invention;
FIG. 6A is a view illustrating the dental implant cleaner according to one embodiment according to the second aspect in FIG. 5;
FIG. 7 is a concept view illustrating the dental implant cleaner according to the third aspect of the present invention;
FIG. 8A is a view illustrating the dental implant cleaner according to one embodiment according to the third aspect in FIG. 7; and
FIG. 9 is an exemplary view illustrating one example to use the dental implant cleaner in FIG. 3.

### Best Mode for Carrying Out the Invention

Reference will now be made in detail to embodiments of the present invention, examples of which are illustrated in the accompanying drawings, wherein like reference numerals refer to the like elements throughout. The embodiments are described below in order to explain the present invention by referring to the figures.

Hereinafter, the dental implant cleaner according to the various aspects and the preferred embodiments of the present invention are explained in detail referring to the accompanying drawings.

### 1^{st} aspect

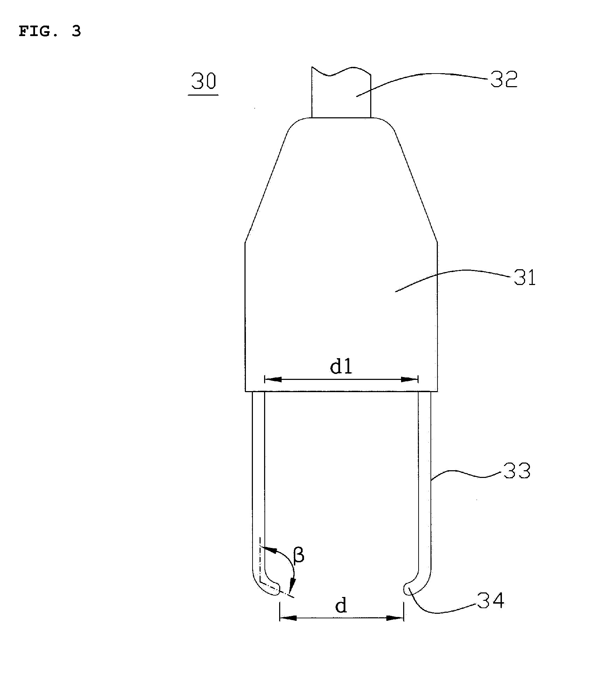

FIG. 3 is a concept view illustrating the dental implant cleaner according to the first aspect of the present invention.

The dental implant cleaner 30 according to the first aspect of the present invention comprises a plurality of elastic supporting legs 33 to encompass the surface of the dental implant and a plurality of cleaning tips 34 provided at the end portion of a plurality of elastic supporting legs 33 respectively to contact the surface of the dental implant.

As shown in FIG. 3, the main body 31 has an upper surface provided with the shank 32 which will be mounted to a hand-piece, and a lower surface provided with a plurality of elastic supporting legs 33 to be straightly stretched downwardly. And, the plurality of elastic supporting legs 33 have end portions provided with the cleaning tips 34 inwardly. At this time, the distance d1 between the elastic supporting legs 33 is greater than the distance d between the cleaning tips 34. Also, the cleaning tips 34 are inwardly bent with respect to the elastic supporting legs 33, and the bending angle β is preferably 45°∼ 145°. The dental implant may be much easily entered in the cleaning tips 34 if the angle β is smaller than 90°, meanwhile the cleaning force may be improved if the angle β is greater than 90°.

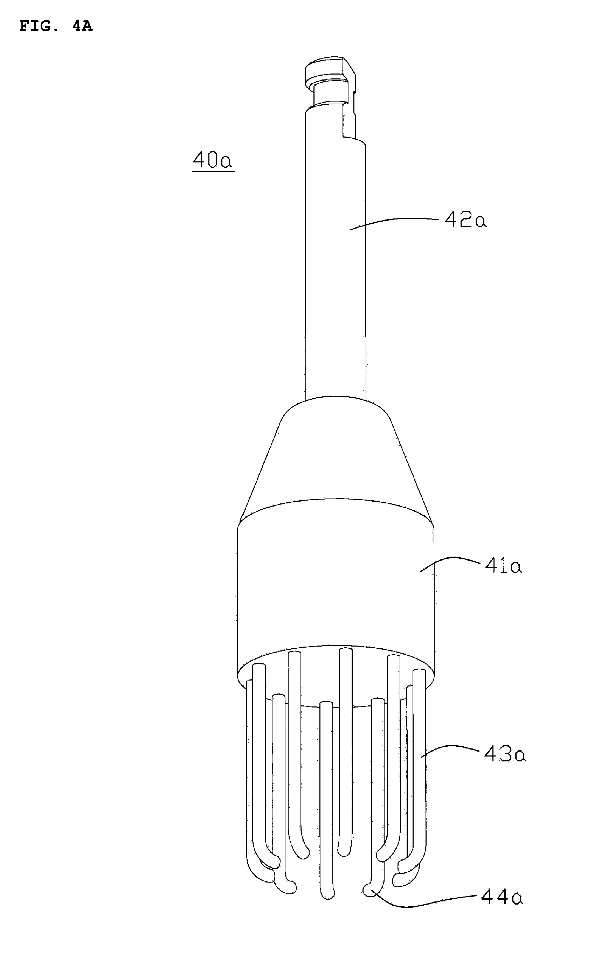

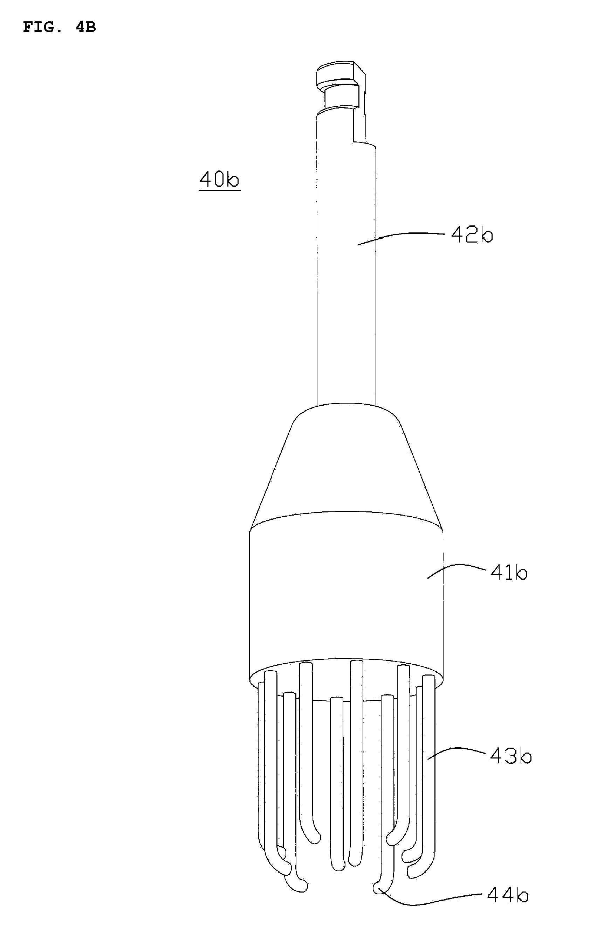

Various embodiments according to the first aspect of the present invention are shown in FIGs. 4A and 4B. FIGs. 4A and 4B are views illustrating the dental implant cleaners according to various embodiments according to the first aspect in FIG. 3.

As shown in FIG. 4A, the dental implant cleaner 40a of one embodiment according to the first aspect of the present invention comprises a main body 41a, a shank 42a, a plurality of elastic supporting legs 43a and a plurality of cleaning tips 44a.

The main body 41a is cylindrically made by the injection molding with plastic materials in the light of decreasing its manufacturing cost, otherwise it may be made of metal materials to fit its usage.

The shank 42a is a portion to be mounted a driving apparatus such as a hand-piece, and its structure is identical with the general shank, and therefore the structure is not specifically explained herein.

The elastic supporting legs 43a are portions to encompass the surface of the dental implant, and they are formed to have a circle cross section and enough elasticity. The material of the elastic supporting legs 43a is preferably Ti alloy such as NiTi or stainless such as CrCo. The elastic supporting legs 43a have a diameter of 0.1mm∼0.7mm, and preferably 0.2mm∼0.4mm.

The cleaning tips 44a are portions to contact the surface of the dental implant, and they are formed to have a circle cross section and inwardly bent with respect to the elastic supporting legs 43a respectively. At this time, each cleaning tip 44a has an obtuse angle with respect to the elastic supporting leg 43a so as to enhance a cleaning force.

Each cleaning tip 44a has a length as much as the depth of the thread formed on the outer periphery surface of the dental implant, and it has a thickness to be enough thin to be easily inserted in the thread. Further, each end of the cleaning tips 44a is formed to be sharp or round, in FIG. 4A, the end of the cleaning tips 44a is formed to be round. The cleaning tips 44a have a length of 0.1mm∼0.7mm, preferably 0.3mm∼0.5mm and a diameter of 0.1mm∼0.7mm, preferably 0.2mm∼0.4mm. Also, all tips of the cleaning tips 44a are positioned at the same level.

As shown in FIG. 4B, the dental implant cleaner 40b of another embodiment according to the first aspect of the present invention comprises a main body 41b, a shank 42b, a plurality of elastic supporting legs 43b and a plurality of cleaning tips 44b.

The main body 41b, the shank 42b and the plurality of elastic supporting legs 43b are identical with the main body 41a, the shank 42a and the plurality of elastic supporting legs 43a in FIG. 4A, and therefore the specific explanations for them are omitted to avoid repetition of its explanation.

The cleaning tips 44b are positioned at the different level otherwise the cleaning tips 44a in FIG. 4a. When the level of the tips 44b differs from each other, the cleaning area for the surface of the dental implant is widened and therefore the time required for cleaning may be decreased.

### 2^{nd} aspect

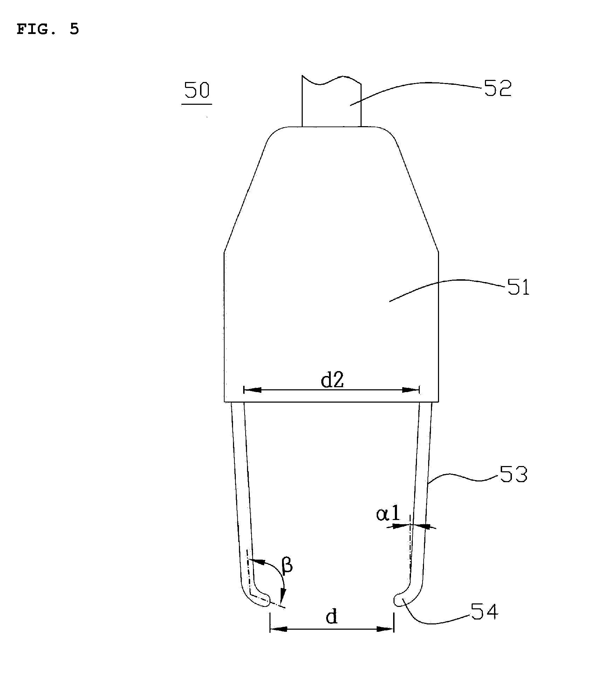

FIG. 5 is a concept view illustrating the dental implant cleaner according to the second aspect of the present invention.

The dental implant cleaner 50 according to the second aspect of the present invention comprises a plurality of elastic supporting legs 53 to encompass a surface of a dental implant and a plurality of cleaning tips 54 provided at the end portion of the elastic supporting legs 53 respectively to contact the surface of the dental implant.

As shown in FIG. 5, the main body 51 has an upper surface provided with the shank 52 which will be mounted to a hand-piece, and a lower surface provided with a plurality of elastic supporting legs 53. And, the plurality of elastic supporting legs 53 are respectively inclined to have an angle α1 to be narrower inwardly downwardly, and they have an end portion provided with the cleaning tips 54 inwardly. At this time, the distance d2 between the elastic supporting legs 53 is greater than the distance d between the cleaning tips 54, and even greater than the distance d1 between the elastic supporting legs 33 in FIG. 3. Also, the cleaning tips 54 are inwardly bent with respect to the elastic supporting legs 53, and the bending angle β is preferably 45°∼ 145°. The dental implant may be much easily entered in the cleaning tips 54 if the angle β is smaller than 90°, meanwhile the cleaning force may be improved if the angle β is greater than 90°.

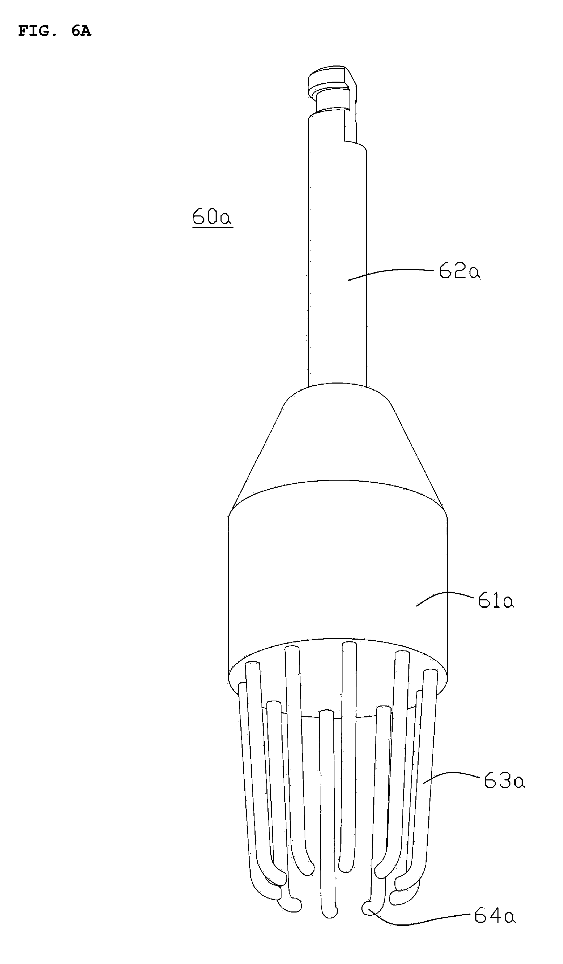

One embodiment according to the second aspect of the present invention is shown in FIG. 6A. FIG. 6A is a view illustrating the dental implant cleaner according to one embodiment according to the second aspect in FIG. 5.

As shown in FIG. 6A, the dental implant cleaner 60a of one embodiment according to the second aspect of the present invention comprises a main body 61a, a shank 62a, a plurality of elastic supporting legs 63a and a plurality of cleaning tips 64a.

The main body 61a, the shank 62a and the plurality of cleaning tips 64a are identical with the main body 41a, the shank 42a and the plurality of cleaning tips 44a in FIG. 4A, and therefore the specific explanations for them are omitted to avoid the repetition of its explanation.

The plurality of elastic supporting legs 63a are respectively inclined to be narrower inwardly downwardly otherwise the plurality of elastic supporting legs 43a in FIG. 4A. Even not shown, at this time, the inclined angle is identical with the inclined angle α1 of the elastic supporting legs 53 in FIG. 5.

The plurality of cleaning tips 64a are positioned at the same level, but they may be positioned at the different level as like FIG. 4B.

### 3^{rd} aspect

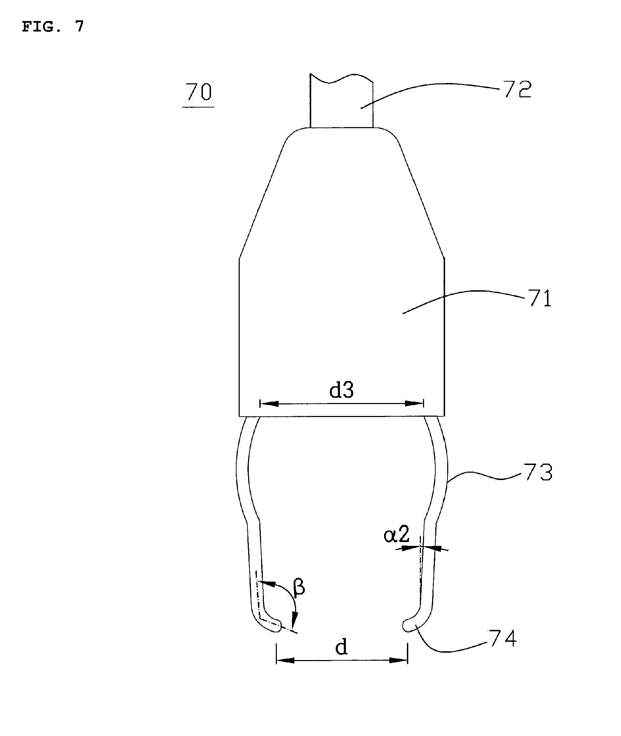

FIG. 7 is a concept view illustrating the dental implant cleaner according to the third aspect of the present invention.

The dental implant cleaner 70 according to the third aspect of the present invention comprises a plurality of elastic supporting legs 73 to encompass a surface of a dental implant and a plurality of cleaning tips 74 provided respectively at end portions of the elastic supporting legs 73 to contact the surface of the dental implant.

As shown in FIG. 7, the main body 71 has an upper surface provided with the shank 72 which will be mounted to a hand-piece, and a lower surface provided with a plurality of elastic supporting legs 73. And, the plurality of elastic supporting legs 73 are respectively inclined to have an angle α2 to be narrower inwardly downwardly, and they respectively have a upper portion having a pot shape and an end portion provided with the cleaning tip 74 inwardly. At this time, the distance d3 between the elastic supporting legs 73 is greater than the distance d between the cleaning tips 74, also greater than the distance d1 between the elastic supporting legs 33 in FIG. 3, but smaller than the distance d2 the elastic supporting legs 53 in FIG. 5. Further, the inclined angle α2 of the elastic supporting legs 73 is smaller than the inclined angle α1 of the elastic supporting legs 53 in FIG. 5.

Also, the cleaning tips 74 are respectively bent with respect to the elastic supporting legs 73 inwardly, and the bending angle β is preferably 45°∼ 145°. The dental implant may be much easily entered in the cleaning tips 74 if the angle β is smaller than 90°, meanwhile the cleaning force may be improved if the angle β is greater than 90°.

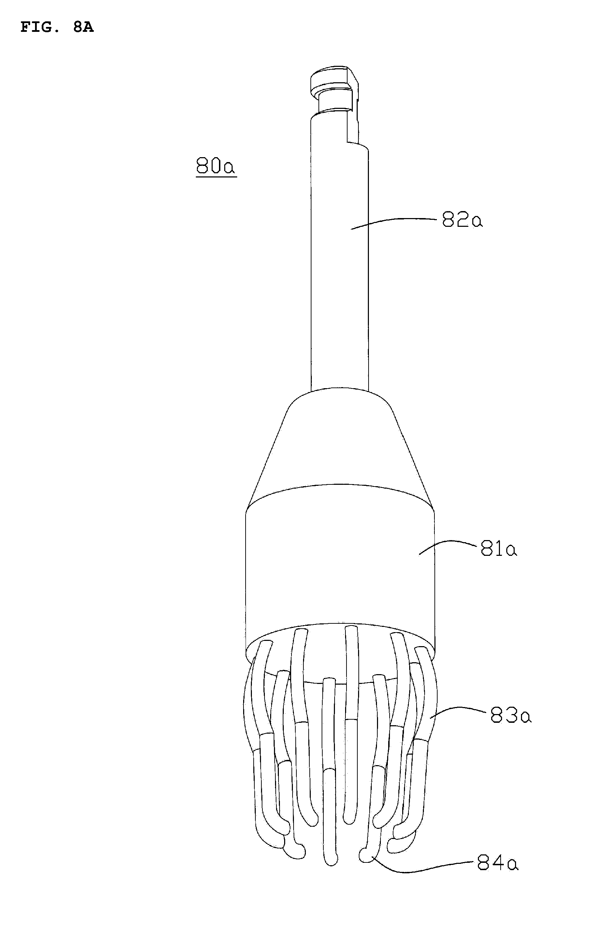

One embodiment according to the third aspect of the present invention is shown in FIG. 8A. FIG. 8A is a view illustrating the dental implant cleaner according to one embodiment according to the third aspect in FIG. 7.

As shown in FIG. 8A, the dental implant cleaner 80a of one embodiment according to the third aspect of the present invention comprises a main body 81a, a shank 82a, a plurality of elastic supporting legs 83a and a plurality of cleaning tips 84a.

The main body 81a, the shank 82a and the plurality of cleaning tips 84a are identical with the main body 41a, the shank 42a and the plurality of cleaning tips 44a in FIG. 4A, and therefore the specific explanations for them are omitted to avoid the repetition of its explanation.

The plurality of elastic supporting legs 63a respectively have a upper portion having a pot shape and they are respectively inclined with the angle α2 to be narrower inwardly downwardly. Even not shown, at this time, the inclined angle is identical with the inclined angle α2 of the elastic supporting legs 73 in FIG. 7.

The cleaning tips 84a are positioned at the same level, but otherwise they may be positioned at the different level as like FIG. 4B.

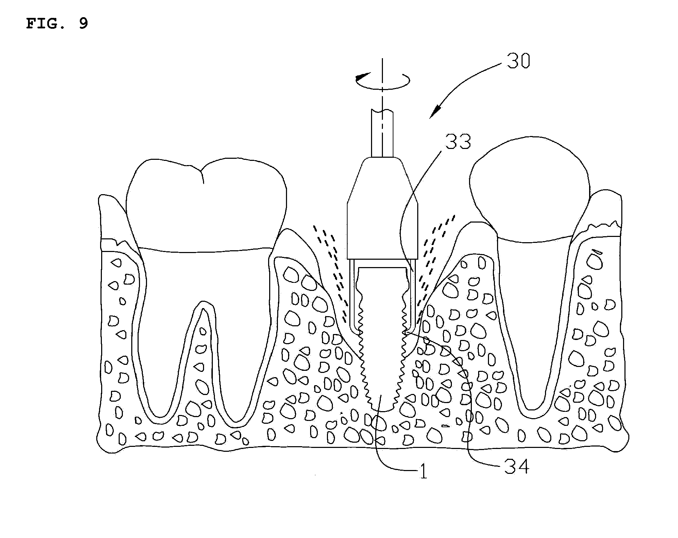

FIG. 9 is an exemplary view illustrating one example to use the dental implant cleaner in FIG. 3.

As shown in FIG. 9, the dental implant cleaner 30 is used to clean the dental implant which is partially exposed outwardly because the alveolar bone is partially lost. At this time, the exposed dental implant 1 is inserted in the plurality of elastic supporting legs 33 such that the cleaning tips 34 of the cleaner 30 are contacted to the surface of the dental implant 1, and then a hand-piece is operated. With the operation of the hand-piece, the cleaning cleaner 30 is rotated in high or low speed, and then the cleaning tips 34 clearly remove the foreign substances such as dental plaque, inflammatory tissue or bacteria built up the surface of the dental implant 1. At this time, the operation of the hand-piece is basically one way rotation, but otherwise it may be two way rotation or vibration.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

## Claims

1. A dental implant cleaner comprising:
a main body;
a shank provided at the upper surface of the main body to be mounted on a hand-piece;
a plurality of elastic supporting legs provided at the lower surface of the main body to encompass the surface of the dental implant; and
a plurality of cleaning tips provided inwardly at the end portion of the elastic supporting legs respectively to be contacted on the surface of the dental implant.

2. The dental implant cleaner according to claim 1, wherein the elastic supporting legs are straightly stretched downwardly, the elastic supporting legs are inclined to be narrower inwardly downwardly, or the elastic supporting legs are inclined to be narrower inwardly downwardly and have a pot shaped upper portion.

3. The dental implant cleaner according to claim 1, wherein the cleaning tips are bent from the end portions of the elastic supporting legs respectively.

4. The dental implant cleaner according to claim 3, wherein the bent angle is 45°∼ 145°.

5. The dental implant cleaner according to claim 4, wherein the bent angle is an obtuse angle.

6. The dental implant cleaner according to claim 1, wherein the elastic supporting legs are formed respectively to have a circle cross section and enough elasticity.

7. The dental implant cleaner according to claim 6, wherein the elastic supporting legs respectively have a diameter of 0.1mm∼0.7mm.

8. The dental implant cleaner according to claim 7, wherein the diameter is 0.2mm∼0.4mm.

9. The dental implant cleaner according to claim 6, wherein the elastic supporting legs are made of Ti alloy such as NiTi or stainless such as CrCo.

10. The dental implant cleaner according to claim 6, wherein the cleaning tips respectively have a length as much as the depth of the thread formed on the outer periphery surface of the dental implant, a thickness to be enough thin to be easily inserted in the thread, and a sharp or round end.

11. The dental implant cleaner according to claim 10, wherein the cleaning tips have a length of 0.1mm~0.7mm.

12. The dental implant cleaner according to claim 11, wherein the length is 0.2mm∼0.4mm.

13. The dental implant cleaner according to claim 10, wherein the cleaning tips have a diameter of 0.1mm∼0.7mm.

14. The dental implant cleaner according to claim 13, wherein the diameter is 0.2mm∼0.4mm.

15. The dental implant cleaner according to claim 2, wherein the cleaning tips are respectively positioned at the same or different level.
